# EUROPEAN PATENT APPLICATION

(11) **EP 4 521 832 A1**
(43) Date of publication of application: **12.03.2025**
(21) Application number: 23799203.7
(22) Date of filing: 26.04.2023
(51) Int. Cl.: H04W 72/04

(54) **METHOD AND APPARATUS FOR FORMING DATA SEQUENCE, AND STORAGE MEDIUM AND ELECTRONIC APPARATUS**

(30) Priority: 05.05.2022 CN 202210482314
(71) Applicant: ZTE Corporation, Shenzhen, Guangdong 518057 (CN)
(72) Inventor: XIN, Yu, Shenzhen, Guangdong 518057 (CN); YU, Guanghui, Shenzhen, Guangdong 518057 (CN); HUA, Jian, Shenzhen, Guangdong 518057 (CN); BAO, Tong, Shenzhen, Guangdong 518057 (CN); XU, Jin, Shenzhen, Guangdong 518057 (CN); HU, Liujun, Shenzhen, Guangdong 518057 (CN)
(74) Representative: Mozzi, Matteo
(86) International application number: PCT/CN2023/090919
(87) International publication number: WO 2023/213217

(57) **Abstract**

The embodiments of the present disclosure provide a data sequence forming method and apparatus, a storage medium, and an electronic device. The method comprises: dividing N frequency domain resource blocks used for transmitting data to be transmitted into two groups to obtain two groups of frequency domain resource blocks, wherein each group comprises L(m) frequency domain resource blocks, and the two groups of frequency domain resource blocks are distributed alternately in frequency domain, where N and L(m) are both positive integers, and m = 1 or 2; and processing data to be transmitted on the L(m) frequency domain resource blocks in each group respectively to form L(m) groups of data sequences. The described technical solution solves the problem in the prior art that interference easily occurs between sub-bands when data sequences are filtered.

## Description

The present disclosure claims priority to Chinese patent application no. 202210482314.4, filed with the Chinese Patent Office on May 5, 2022 and entitled "Method and Apparatus for Forming Data Sequence, and Storage Medium and Electronic Apparatus", which is incorporated herein by reference in its entirety.

### Technical Field

The embodiments of the present disclosure relate to the field of communications, and in particular, to a method and apparatus for forming data sequence, a storage medium and an electronic apparatus.

### Background

The Fifth Generation New Radio (5G NR) communication technology uses a Cyclic Prefix Orthogonal Frequency Division Multiplexing (CP-OFDM) system as a basic waveform. However, the performance of the CP-OFDM system is sensitive to frequency offset and time offset between adjacent sub-bands, and this is mainly because the significant frequency spectrum leakage of the CP-OFDM system, thereby easily causing inter-sub-band interference. Furthermore, different numerologies may be used between two adjacent sub-bands, which damages the orthogonality between the sub-carriers and brings the new problem of interference. Aiming at how to solve the interference problem, one straightforward method is to insert a guard bandwidth between two transmission bands with different numerologies, but this will lead to the wastage of frequency resources.

For the problem in the related art that interference easily occurs between sub-bands when data sequences are filtered, no effective solution has been proposed.

Therefore, there is a need for improvements in the related art to overcome the described defect in the related art.

### Summary

The embodiments of the present disclosure provide a data sequence forming method and apparatus, a storage medium, and an electronic device, so as to at least solve the problem in the related art that interference easily occurs between sub-bands when data sequences are filtered.

According to an embodiment of the present disclosure, a data sequence forming method is provided. The method comprises: N frequency domain resource blocks used for transmitting data to be transmitted are divided into two groups to obtain two groups of frequency domain resource blocks, wherein each group comprises L(m) frequency domain resource blocks, and the two groups of frequency domain resource blocks are distributed alternately in a frequency domain, where N and L(m) are both positive integers, and m = 1 or 2; and data to be transmitted on the L(m) frequency domain resource blocks in each group is processed respectively to form L(m) groups of data sequences.

According to an embodiment of the present disclosure, a data sequence forming apparatus is provided. The apparatus comprises: a dividing module, configured to divide N frequency domain resource blocks used for transmitting data to be transmitted into two groups to obtain two groups of frequency domain resource blocks, wherein each group comprises L(m) frequency domain resource blocks, and the two groups of frequency domain resource blocks are distributed alternately in a frequency domain, where N and L(m) are both positive integers, and m = 1 or 2; and a processing module, configured to process data to be transmitted on the L(m) frequency domain resource blocks in each group respectively to form L(m) groups of data sequences.

By means of the present disclosure, N frequency domain resource blocks used for transmitting data to be transmitted are divided into two groups of frequency domain resource blocks, wherein each of the N frequency domain resource blocks comprises k(n) sub-carriers, each group comprises L(m) frequency domain resource blocks, and the two groups of frequency domain resource blocks are distributed alternately in a frequency domain, where n = 1, 2, ..., N, k(n) and L(m) are both positive integers, L(1) + L(2) = N, and m = 1 or 2; data to be transmitted on the L(m) frequency domain resource blocks in each group is processed respectively to form L(m) groups of data sequences. In this solution, N frequency domain resource blocks are divided into two groups of frequency domain resource blocks, and the two groups are distributed alternately. In this way, the bandwidth of the frequency domain resource blocks in different groups may be different, and windowing or filtering may be performed by using waveform functions with different parameters; the bandwidth of the frequency domain resource blocks in the same group is more likely to be equal, which facilitates performing unified windowing or filtering by using the same waveform function, and reduces the processing complexity. The alternate distribution method allows the interval between adjacent frequency domain resource blocks in the same group to be equal and greater than the bandwidth of the frequency domain resource blocks, and furthermore, allows the reciprocal of the time domain data interval of data to be transmitted on each resource block in the same group, after being subjected to an over-sampled inverse Fourier transform, to be equal to the interval between adjacent resource blocks in the group. **In** this way, interference between adjacent frequency domain resource blocks in the same group can be avoided, thereby solving the problem in the related art that interference easily occurs between sub-bands when data sequences are filtered.

### Brief Description of the Drawings

Fig. 1 is a hardware structural block diagram of a computer terminal for an optional data sequence forming method according to an embodiment of the present disclosure;
Fig. 2 is a flowchart of an optional data sequence forming method according to an embodiment of the present disclosure;
Fig. 3 is a schematic diagram of an optional data sequence forming method according to Example 1;
Fig. 4 is another schematic diagram of an optional data sequence forming method according to Example 2;
Fig. 5 is still another schematic diagram of an optional data sequence forming method according to Example 3;
Fig. 6 is a schematic diagram of an optional method for transmitting a group of time domain data sequences according to Example 4; and
Fig. 7 is a structural block diagram of an optional data sequence forming apparatus according to an embodiment of the present disclosure.

### Detailed Description of the Embodiments

In order to make persons skilled in the art better understand the solutions of the present disclosure, the following clearly and completely describes the technical solutions in the embodiments of the present disclosure with reference to the drawings in the embodiments of the present disclosure. Apparently, the described embodiments are merely some of rather than all of the embodiments of the present disclosure. All other embodiments obtained by persons of ordinary skill in the art based on the embodiments of the present disclosure without inventive efforts shall belong to the scope of protection of the present disclosure.

It should be noted that, terms such as "first" and "second" in the description and the claims of the present disclosure and the described drawings are used to distinguish similar objects, but are not necessarily used to describe a specific sequence or order. It should be understood that the data so used may be interchanged where appropriate such that the embodiments of the present disclosure described herein can be implemented in sequences other than those illustrated or described herein. In addition, the terms "comprise" and "have", and any variations thereof, are intended to cover a non-exclusive inclusion, for example, a process, method, system, product, or apparatus that includes a series of steps or units is not necessarily limited to those steps or units that are expressly listed, but may include other steps or units that are not expressly listed or inherent to such process, method, product, or apparatus.

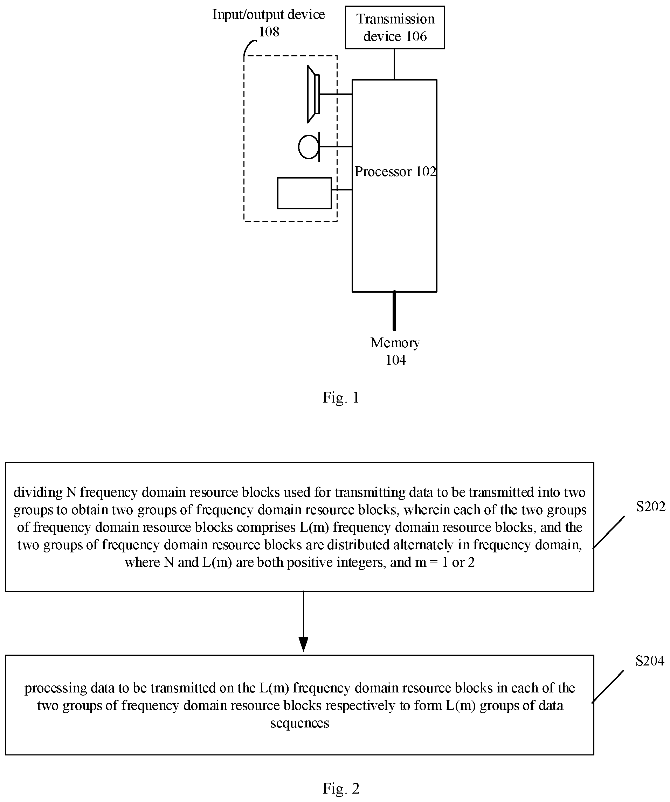

The method embodiments provided in the embodiments of the present disclosure may be implemented in a computer terminal or a similar computing device. Taking running on a computer terminal as an example, Fig. 1 is a hardware structural block diagram of a computer terminal for an optional data sequence forming method according to an embodiment of the present disclosure. As shown in Fig. 1, the computer terminal may include one or more (only one is shown in Fig. 1) processors 102 (the processors 102 may include, but are not limited to, a processing apparatus such as a microprocessor MCU or a programmable logic device FPGA) and a memory 104 configured to store data, wherein the computer terminal may further include a transmission device 106 configured to have a communication function, and an input/output device 108. A person of ordinary skill in the art may understand that the structure shown in Fig. 1 is merely exemplary, which does not limit the structure of the computer terminal. For example, the computer terminal may further include components more or less than that shown in Fig. 1, or have a configuration different from that shown in Fig. 1.

The memory 104 may be configured to store a computer program, for example, a software program and a module of application software, such as a computer program corresponding to the data sequence forming method in the embodiments of the present disclosure. The processor 102 runs the computer program stored in the memory 104, so as to execute various function applications and data processing, i.e. to implement the described method. The memory 104 may include a high-speed random access memory, and may also include a non-volatile memory, such as one or more magnetic storage apparatuses, flash memory, or other non-volatile solid-state memory. In some examples, the memory 104 may further include a memory configured remotely relative to the processor 102, and the remote memory may be connected to a mobile terminal over a network. Examples of the described network include, but are not limited to, the Internet, intranets, local area networks, mobile communication networks, and combinations thereof.

The transmission device 106 is configured to receive or transmit data via a network. Specific examples of the described network may include a wireless network provided by a communication provider of the mobile terminal. In an embodiment, the transmission device 106 includes a Network Interface Controller (NIC) that may be coupled to other network devices via a base station to communicate with the Internet. In an embodiment, the transmission device 106 may be a Radio Frequency (RF) module configured to wirelessly communicate with the Internet.

This embodiment provides a data sequence forming method running on the computer terminal. Fig. 2 is a flowchart of a data sequence forming method according to an embodiment of the present disclosure. As shown in Fig. 2, the flow comprises the following steps:
step S202: N frequency domain resource blocks used for transmitting data to be transmitted are divided into two groups to obtain two groups of frequency domain resource blocks, wherein each group comprises L(m) frequency domain resource blocks, and the two groups of frequency domain resource blocks are distributed alternately in a frequency domain, where N and L(m) are both positive integers, and m = 1 or 2.

It should be noted that each of the N frequency domain resource blocks comprises k(n) sub-carriers, where n = 1, 2, ..., N, k(n) and L(m) are both positive integers, L(1) + L(2) = N, and m = 1 or 2, wherein L(1) should refer to the number of frequency domain resource blocks comprised in the first group of frequency domain resource blocks, and L(2) should refer to the number of frequency domain resource blocks comprised in the second group of frequency domain resource blocks.

Step S204: data to be transmitted on the L(m) frequency domain resource blocks in each group is processed respectively to form L(m) groups of data sequences.

By means of the present disclosure, N frequency domain resource blocks used for transmitting data to be transmitted are divided into two groups of frequency domain resource blocks, wherein each group comprises L(m) frequency domain resource blocks, and the two groups of frequency domain resource blocks are distributed alternately in a frequency domain, where N and L(m) are both positive integers, and m = 1 or 2. Data to be transmitted on the L(m) frequency domain resource blocks in each group is processed respectively to form L(m) groups of data sequences. In the present solution, N frequency domain resource blocks are divided into two groups of frequency domain resource blocks, and the two groups can be distributed alternately. In this way, the bandwidth of the frequency domain resource blocks in different groups may be different, and windowing or filtering may be performed by using waveform functions with different parameters; the bandwidth of the frequency domain resource blocks in the same group is more likely to be equal, which facilitates performing unified windowing or filtering by using the same waveform function, and reduces the processing complexity. The alternate distribution method allows the interval between adjacent frequency domain resource blocks in the same group to be equal and greater than the bandwidth of the frequency domain resource blocks, and furthermore, allows the reciprocal of the time domain data interval of data to be transmitted on each resource block in the same group, after being subjected to an over-sampled inverse Fourier transform, to be equal to the interval between adjacent resource blocks in the group. In this way, interference between adjacent frequency domain resource blocks in the same group can be avoided, thereby solving the problem in the related art that interference easily occurs between sub-bands when data sequences are filtered.

It should be further noted that, in step S202: "N frequency domain resource blocks used for transmitting data to be transmitted are divided into two groups", N frequency domain resource blocks are divided into two groups because: (1) the bandwidth of the frequency domain resource blocks in different groups may be different, and windowing or filtering may be performed by using waveform functions with different parameters; (2) the bandwidth of the frequency domain resource blocks in the same group is more likely to be equal, which facilitates performing unified windowing or filtering by using the same waveform function, and reduces the processing complexity; and (3) two groups can be distributed alternately, and the method allows the interval between adjacent frequency domain resource blocks in the same group to be equal and greater than the bandwidth of the frequency domain resource blocks; alternatively, the method allows the reciprocal of the time domain data interval of data to be transmitted on each resource block in the same group, after being subjected to an over-sampled inverse Fourier transform, to be equal to the interval between adjacent resource blocks in the group, thereby avoiding interference between adjacent frequency domain resource blocks in the same group.

Optionally, in step S204: "data to be transmitted on the L(m) frequency domain resource blocks in each group is processed respectively to form L(m) groups of data sequences", wherein the processing comprises inverse Fourier transform. The inverse Fourier transform is over-sampled inverse Fourier transform. The number of Inverse Fast Fourier Transform (IFFT) points or the number of Inverse Discrete Fourier Transform (IDFT) points of the inverse Fourier transform is greater than or equal to k(n). The number of IFFT points may also be referred to as IFFT size.

Further, the number of IFFT points is less than the sum of the number of the sub-carriers comprised in the N frequency domain resource blocks.

Further, inverse Fourier transform is performed on a certain frequency domain resource block, and a zero frequency position during the inverse Fourier transform operation falls within the range of this frequency domain resource block. Zero frequency positions of different frequency domain resource blocks during inverse Fourier transform operations are different.

Further, inverse Fourier transform is performed on a certain frequency domain resource block, and a zero frequency position (or a zero sub-carrier) during the inverse Fourier transform operation is located at one of k(n) sub-carriers of each resource block.

Further, the data to be transmitted is subjected to inverse Fourier transform to form a group of data sequences, and the data to be transmitted on the L(m) frequency domain resource blocks is subjected to inverse Fourier transform respectively to form L(m) groups of data sequences.

Further, before performing the inverse Fourier transform on the data to be transmitted, a Fast Fourier Transform (FFT) or a Discrete Fourier Transform (DFT) is also comprised.

In an optional embodiment, the method further comprises: the L(m) groups of data sequences are processed to form one group of data sequences; two groups of data sequences corresponding to the two groups of frequency domain resource blocks are processed to form a combined group of data sequences; and the combined group of data sequences is transmitted.

It should be noted that each group forms one group of data sequences.

It should be noted that two groups of frequency domain resource blocks are combined to form one group of data sequences.

Optionally, in this embodiment, L(m) groups of data sequences are processed to form one group of data sequences, this processing comprises inverse Fourier transform, wherein the inverse Fourier transform is an over-sampled inverse Fourier transform, and the number of IFFT points of the inverse Fourier transform is greater than L(m).

Further, this inverse Fourier transform comprises: performing inverse Fourier transform once on every L(m) pieces of data, wherein every L(m) pieces of data are respectively from L(m) groups of data sequences. For example, the L(m) groups of data sequences are arranged in L(m) rows respectively, L(m) pieces of data are then extracted according to columns, and an inverse Fourier transform is performed once on every extracted L(m) pieces of data.

Further, after a number of 0 are added to every L(m) pieces of data, inverse Fourier transform is performed, that is to say, the processing of L(m) groups of data sequences further comprises adding multiple groups of zero data sequences, and then performing the inverse Fourier transform.

Further, one group of data sequences refers to one group of time domain data sequences, and is formed by serially connecting multiple time domain data sequences generated by the inverse Fourier transform.

Optionally, in this embodiment, two groups of data sequences corresponding to the two groups of frequency domain resource blocks are processed to form a combined group of data sequences, and this processing comprises: performing an addition operation on the two groups of data sequences to form one group of data sequences.

By means of the description of the described embodiment, N frequency domain resource blocks used for transmitting data to be transmitted are divided into two groups, as the bandwidth of the frequency domain resource blocks in different groups may be different, windowing or filtering may be performed by using waveform functions with different parameters; in addition, the bandwidth of the frequency domain resource blocks in the same group is more likely to be equal, which facilitates performing unified windowing or filtering by using the same waveform function, and reduces the processing complexity; further, two groups can be distributed alternately, and the method allows the interval between adjacent frequency domain resource blocks in the same group to be equal and greater than the bandwidth of the frequency domain resource blocks; alternatively, the method allows the reciprocal of the time domain data interval of data to be transmitted on each resource block in the same group, after being subjected to an over-sampled inverse Fourier transform, to be equal to the interval between adjacent resource blocks in the group, thereby avoiding interference between adjacent frequency domain resource blocks in the same group.

Further, in addition to performing an addition operation on the two groups of data sequences to form one group of data sequences, the method further comprises, before the addition operation, performing a point multiplication operation on at least one group of data sequences. In the point multiplication operation, the sequence to be multiplied by point multiplication is a sequence in which the modulus thereof is equal while the phase changes sequentially.

Further, in addition to performing an addition operation on the two groups of data sequences to form one group of data sequences, the method further comprises, before the addition operation, performing a windowing operation or a filtering operation on each group of data sequences.

Further, the two groups are subjected to a windowing operation or a filtering operation by using filtering functions with different parameters.

Optionally, in this embodiment, the step that the group of data sequences is transmitted further comprises filtering the group of data sequences.

Further, the step that the group of data sequences is transmitted further comprises filtering each frequency domain resource block by using the same waveform function.

Further, the filtering is single-phase filtering or multi-phase filtering.

Further, the filtering functions used for multi-phase filtering comprise: a root raised cosine function, a raised cosine function, a rectangular function, an Isotropic Orthogonal Transform Algorithm (IOTA) function, or a 1+D function.

Further, the step that the group of data sequences is transmitted further comprises performing a windowing operation on the group of data sequences.

Further, the step that the group of data sequences is transmitted further comprises, by means of a windowing operation or a multi-phase filtering operation, filtering each frequency domain resource block by using the same waveform function.

Further, the data to be transmitted comprises constellation point modulated data and also reference signal data.

On the basis of the described solution, as the bandwidth of the frequency domain resource blocks in different groups may be different, windowing or filtering may be performed by using waveform functions with different parameters; the bandwidth of the frequency domain resource blocks in the same group is more likely to be equal, which facilitates performing unified windowing or filtering by using the same waveform function, and reduces the processing complexity. The alternate distribution method allows the interval between adjacent frequency domain resource blocks in the same group to be equal and greater than the bandwidth of the frequency domain resource blocks, and furthermore, allows the reciprocal of the time domain data interval of data to be transmitted on each resource block in the same group, after being subjected to an over-sampled inverse Fourier transform, to be equal to the interval between adjacent resource blocks in the group.

In an optional embodiment, the method further comprises: the N frequency domain resource blocks are distributed continuously in the frequency domain.

In an optional embodiment, the method further comprises: the L(m) frequency domain resource blocks in each group are discontinuous in the frequency domain, but the frequency spectrum interval between adjacent frequency domain resource blocks is equal.

In an optional embodiment, the method further comprises: there is at least one group of frequency domain resource blocks, among the two groups of frequency domain resource blocks, in which the bandwidth of the frequency domain resource blocks is 1/w of the frequency spectrum interval between adjacent frequency domain resource blocks in the group, where w is a positive integer.

In an optional embodiment, in the process where data to be transmitted on the L(m) frequency domain resource blocks in each group is processed respectively to form L(m) groups of data sequences, the method further comprises: there is at least one group of frequency domain resource blocks, among the two groups of frequency domain resource blocks, on which the time domain interval between adjacent data of the data sequences is equal to the reciprocal of the frequency spectrum interval between adjacent resource blocks in the group.

In an optional embodiment, the method further comprises: sub-carrier intervals of the N frequency domain resource blocks are all equal.

In an optional embodiment, the method further comprises: among the L(m) frequency domain resource blocks in each group, the number of sub-carriers comprised in the frequency domain resource blocks is equal.

In an optional embodiment, the method further comprises: among the two groups of frequency domain resource blocks, the bandwidth of the frequency domain resource blocks in each group is equal.

In an optional embodiment, the method further comprises: among the two groups of frequency domain resource blocks, the bandwidth of the frequency domain resource blocks in different groups is not equal.

In an optional embodiment, the method further comprises: among the two groups of frequency domain resource blocks, the bandwidth of the frequency domain resource blocks in different groups is equal.

In an optional embodiment, the method further comprises: the bandwidth ratio of the frequency domain resource blocks in different groups is 1:U or U:1, where U = 2i - 1, and i is an integer greater than 0; when i = 0, it indicates that the bandwidth of the frequency domain resource blocks in different groups is equal.

In an optional embodiment, the method further comprises: sub-carrier intervals of the N frequency domain resource blocks are all equal.

In an optional embodiment, the method further comprises: among the L(m) frequency domain resource blocks in each group, the number of sub-carriers comprised in the frequency domain resource blocks is equal.

In an optional embodiment, the method further comprises: among the two groups of frequency domain resource blocks, the bandwidth of the frequency domain resource blocks in each group is equal.

In an optional embodiment, the method further comprises: among the two groups of frequency domain resource blocks, the bandwidth of the frequency domain resource blocks in different groups is not equal.

In an optional embodiment, the method further comprises: among the two groups of frequency domain resource blocks, the bandwidth of the frequency domain resource blocks in different groups is equal.

In an optional embodiment, the method further comprises: the bandwidth ratio of the frequency domain resource blocks in different groups is 1:U or U:1, where U = 2i-1, and i is an integer greater than 0; when i = 0, it indicates that the bandwidth of the frequency domain resource blocks in different groups is equal.

### Example 1

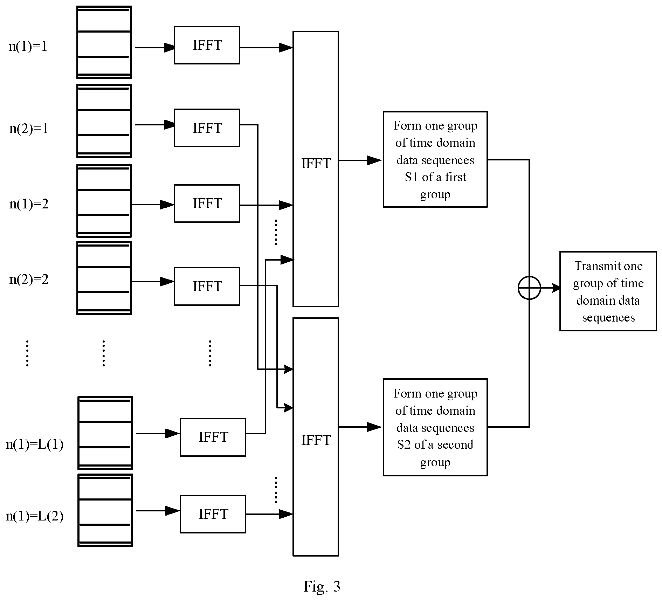

It should be noted that in the following example, m is the number of a frequency domain resource group, and L(m) is the number of frequency domain resource blocks comprised in the mth group of frequency domain resource blocks. In Figs. 3-5, n represents the number of frequency domain resource block, m represents the number of a group, and L(m) represents the number of resource blocks in the mth group. In the Figure, n(1) and n(2) represent the number of group 1 and group 2 of frequency domain resource blocks, respectively.

Data to be transmitted is transmitted in N frequency domain resource blocks, and each of the N resource blocks comprises k(n) sub-carriers. As shown in Fig. 3, Fig. 3 is a schematic diagram of an optional data sequence forming method according to Example 1. In this example, the number of sub-carriers comprised in N resource blocks is equal, and k(n) = 4.

The N frequency domain resource blocks are divided into two groups, intersection exists in the frequency domain ranges where the two groups of frequency domain resource blocks are located, and the two groups of frequency domain resource blocks are distributed alternately in the frequency domain. For example, in the frequency domain, the alternate distribution may be the sequential distribution of a first group of frequency domain resource blocks, a second group of frequency domain resource blocks, a first group of frequency domain resource blocks, a second group of frequency domain resource blocks, ... As shown in Fig. 3, Fig. 3 is a schematic diagram of an optional data sequence forming method according to Example 1. In Fig. 3, the number of resource blocks comprised in the two groups of frequency domain resource blocks is respectively L(1) and L(2), and L(1) + L(2) = N.

Data to be transmitted on the L(m) frequency domain resource blocks in each group is processed to form L(m) groups of data sequences. In this example, inverse Fourier transform is performed on the data to be transmitted on all L(m) frequency domain resource blocks in each group, this inverse Fourier transform may be IFFT or IDFT, and each group forms L(m) groups of data sequences. That is to say, in this example, inverse Fourier transform is performed on the data to be transmitted on the N frequency domain resource blocks respectively to form L(m) groups of data sequences. This inverse Fourier transform is an over-sampled inverse Fourier transform or a non-over-sampled inverse Fourier transform, the number of IFFT points or the number of IDFT points of the inverse Fourier transform is greater than or equal to 4, and the corresponding zero frequency in the inverse Fourier transform operation is within the range of the frequency domain resource block.

The L(m) groups of data sequences of each group are then processed such that each group forms one group of data sequences. In this example, inverse Fourier transform is performed on L(1) groups of data sequences of the first group to form one group of data sequences S1; and inverse Fourier transform is performed on L(2) groups of data sequences of the second group to form one group of data sequences S2. The inverse Fourier transform comprises: performing inverse Fourier transform once on every L(m) pieces of data, wherein every L(m) piece of data are respectively from L(m) groups of data sequences. For example, the L(m) groups of data sequences are arranged in L(m) rows respectively, L(m) pieces of data are then extracted according to columns, and inverse Fourier transform is performed once on every extracted L(m) pieces of data. Performing inverse Fourier transform once on every L(m) pieces of data further comprises performing inverse Fourier transform after adding multiple pieces of zero data to every L(m) pieces of data, wherein the number of IFFT points of the inverse Fourier transform is greater than L(m). Performing inverse Fourier transform once on every L(m) pieces of data forms one time domain data sequence, and time domain data sequences generated by multiple times of inverse Fourier transform are serially connected to form a data sequence S1 or S2.

The data sequence S1 and the data sequence S2 are then processed to form one group of data sequences. In this example, the method for processing the data sequence S1 and the data sequence S2 comprises, but is not limited to: performing an addition operation on the data sequence S1 and the data sequence S2 to form one group of time domain data sequences.

Before the group of time domain data sequences is transmitted, the method further comprises: performing a filtering or windowing operation on the time domain data sequences. In this example, the filtering is multi-phase filtering, and the multi-phase filtering uses the same waveform function, that is to say, the bandwidths of N frequency domain resource blocks are the same, such that the same waveform function is used for the frequency domain resource blocks.

### Example 2

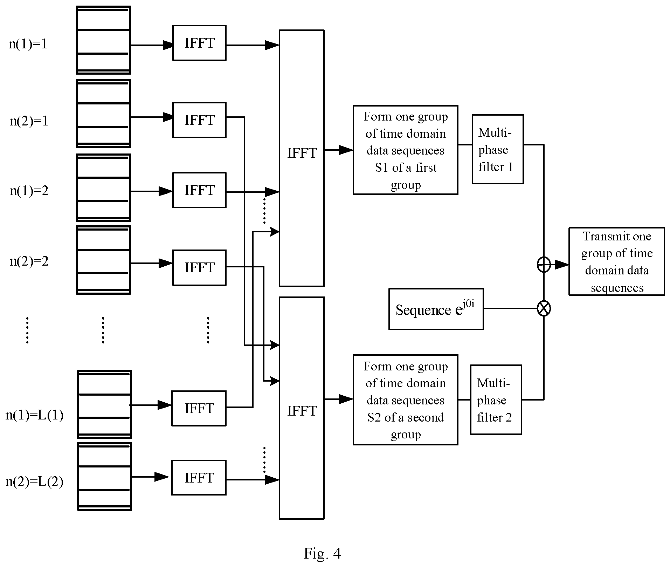

Data to be transmitted is transmitted in N frequency domain resource blocks, and each of the N resource blocks comprises k(n) sub-carriers. As shown in Fig. 4, Fig. 4 is another schematic diagram of an optional data sequence forming method according to Example 2. In this example, the number of sub-carriers comprised in N resource blocks is equal, and k(n) = 4.

The N frequency domain resource blocks are divided into two groups, intersection exists in the frequency domain ranges where the two groups of frequency domain resource blocks are located, and the two groups of frequency domain resource blocks are distributed alternately in the frequency domain. As shown in Fig. 4, Fig. 4 is another schematic diagram of an optional data sequence forming method according to Example 1. In Fig. 4, the number of resource blocks comprised in the two groups of frequency domain resource blocks is respectively L(1) and L(2), and L(1) + L(2) = N.

Data to be transmitted on the L(m) frequency domain resource blocks in each group is processed to form L(m) groups of data sequences. In this example, inverse Fourier transform (IFFT or IDFT) is performed on the data to be transmitted on all L(m) frequency domain resource blocks in each group, and each group forms L(m) groups of data sequences. That is to say, in this example, inverse Fourier transform is performed on the data to be transmitted on the N frequency domain resource blocks respectively to form L(m) groups of data sequences. This inverse Fourier transform is an over-sampled inverse Fourier transform or a non-over-sampled inverse Fourier transform, the number of IFFT points or the number of IDFT points of the inverse Fourier transform is greater than or equal to 4, and the corresponding zero frequency in the inverse Fourier transform operation is within the range of the frequency domain resource block.

The L(m) groups of data sequences of each group are then processed such that each group forms one group of data sequences. In this example, inverse Fourier transform is performed on L(1) groups of data sequences of the first group to form one group of data sequences S1; and inverse Fourier transform is performed on L(2) groups of data sequences of the second group to form one group of data sequences S2. This inverse Fourier transform comprises: performing inverse Fourier transform once on every L(m) pieces of data, wherein every L(m) piece of data are respectively from L(m) groups of data sequences. For example, the L(m) groups of data sequences are arranged in L(m) rows respectively, L(m) pieces of data are then extracted according to columns, and inverse Fourier transform is performed once on every extracted L(m) pieces of data. Performing inverse Fourier transform once on every L(m) pieces of data further comprises performing inverse Fourier transform after adding multiple pieces of zero data to every L(m) pieces of data, wherein the number of IFFT points of the inverse Fourier transform is greater than L(m). Performing inverse Fourier transform once on every L(m) pieces of data forms one time domain data sequence, and time domain data sequences generated by multiple times of inverse Fourier transform are serially connected to form a data sequence S1 or S2.

The data sequence S1 and the data sequence S2 are then processed to form one group of data sequences. In this example, the method for processing the data sequence S1 and the data sequence S2 comprises, but is not limited to: filtering or windowing the data sequence S1, filtering or windowing the data sequence 2, a point multiplication operation, and an addition operation. As the bandwidths of the first group and the second group of frequency domain resource blocks are the same, the waveform functions used when the multi-phase filtering operation is performed on the data sequences S1 and S2 respectively are the same. The point multiplication operation may be a point multiplication operation performed on the data sequence S1, or a point multiplication operation performed on the data sequence S2. In this example, point multiplication is performed on the data sequence S2 after being subjected to the multi-phase filtering operation and the sequence ejθi (where i = 0, 1, 2, ...), and then the addition operation is performed on the data sequence S2 and the sequence obtained after the multi-phase filtering operation is performed on the data sequence S1, so as to form one group of time domain data sequences, and the group of time domain data sequences is transmitted.

### Example 3

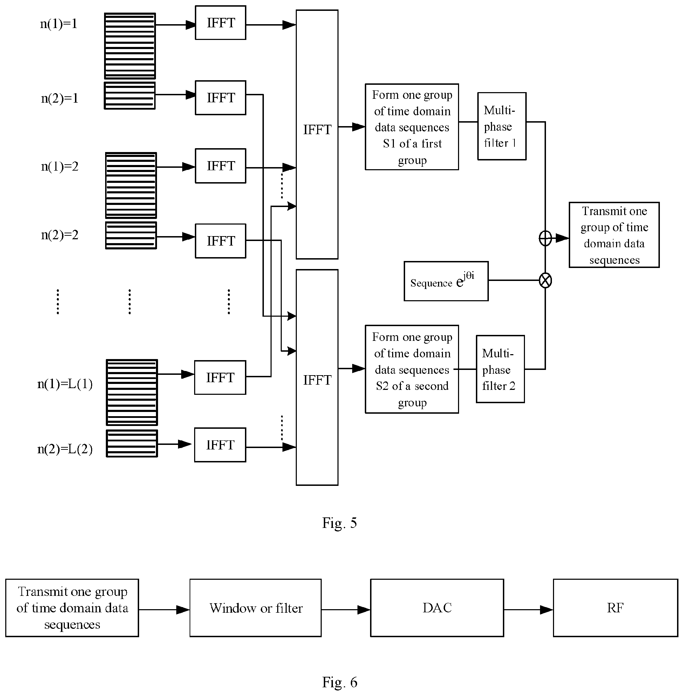

Data to be transmitted is transmitted in N frequency domain resource blocks, and each of the N resource blocks comprises k(n) sub-carriers. As shown in Fig. 5, Fig. 5 is still another schematic diagram of an optional data sequence forming method according to Example 3. In this example, the bandwidths of N frequency domain resource blocks are not all equal, the number of sub-carriers comprised in the frequency domain resource blocks is also not equal, and k(n) = 4 or 12.

The N frequency domain resource blocks are divided into two groups, and the bandwidth of the frequency domain resource blocks in each group is equal. Intersection exists in the frequency domain ranges where the two groups of frequency domain resource blocks are located, and the two groups of frequency domain resource blocks are distributed alternately in the frequency domain. As shown in Fig. 5, Fig. 5 is still another schematic diagram of an optional data sequence forming method according to Example 3. In Fig. 5, the number of resource blocks comprised in the two groups is respectively L(1) and L(2), and L(1) + L(2) = N. The number of sub-carriers comprised in each resource block in the first group is 12, and the number of sub-carriers comprised in each resource block in the second group is 4.

Data to be transmitted on the L(m) frequency domain resource blocks in each group is processed to form L(m) groups of data sequences. In this example, inverse Fourier transform (IFFT or IDFT) is performed on the data to be transmitted on all L(m) frequency domain resource blocks in each group, and each group forms L(m) groups of data sequences. That is to say, in this example, inverse Fourier transform is performed on the data to be transmitted on the N frequency domain resource blocks respectively to form N groups of data sequences. In this example, the inverse Flourier transform is an over-sampled inverse Flourier transform, the number of IFFT points of the inverse Flourier transform for the first group is 16, and the number of IFFT points of the inverse Flourier transform for the second group is 8, and the corresponding zero frequency in the inverse Fourier transform operation is within the range of the frequency domain resource block.

The L(m) groups of data sequences of each group are then processed such that each group forms one group of data sequences. In this example, inverse Fourier transform is performed on L(1) groups of data sequences of the first group to form one group of data sequences S1; and inverse Fourier transform is performed on L(2) groups of data sequences of the second group to form one group of data sequences S2. The inverse Fourier transform comprises: performing an inverse Fourier transform once on every L(m) pieces of data, wherein every L(m) piece of data are respectively from L(m) groups of data sequences. Performing the inverse Fourier transform once on every L(m) pieces of data further comprises adding multiple groups of zero data, and then performing the inverse Fourier transform, wherein the number of IFFT points of the inverse Fourier transform is greater than L(m). Performing the inverse Fourier transform once on every L(m) pieces of data forms one time domain data sequence, and time domain data sequences generated by multiple times of inverse Fourier transform are serially connected to form a data sequence S1 or S2.

The data sequence S1 and the data sequence S2 are then processed to form one group of data sequences, wherein the processing comprises: filtering the data sequence S1, filtering the data sequence 2, a point multiplication operation, and an addition operation. As the bandwidths of the first group and the second group of frequency domain resource blocks are different, the multi-phase filtering operation is performed on the data sequences S1 and S2 respectively, and the waveform functions used are different, that is, the waveform function parameters are different (for example, different waveform function types, or the same waveform function type with different specific parameters). The point multiplication operation may be a point multiplication operation performed on the data sequence S1, or a point multiplication operation performed on the data sequence S2. In this example, point multiplication is performed on the data sequence S2 after being subjected to the multi-phase filtering operation and the sequence ejθi (where i = 0, 1, 2, ...), and then the addition operation is performed on the data sequence S2 and the sequence obtained after the multi-phase filtering operation is performed on the data sequence S1, so as to form one group of time domain data sequences.

The group of time domain data sequences is transmitted.

### Example 4

Transmitting a group of time domain data sequences further comprises: as shown in Fig. 6, Fig. 6 is a schematic diagram of an optional method for transmitting a group of time domain data sequences according to Example 4; and in Fig. 6, after windowing or filtering the group of time domain data sequences, Digital-to-Analog Converter (DAC) and Radio Frequency (RF) processes are performed.

From the description of the described embodiments, a person skilled in the art may clearly understand that the methods according to the described embodiments may be implemented by software and a necessary universal hardware platform, and definitely may also be implemented by hardware. However, in many cases, the former is a preferred implementation. Based on such understanding, the technical solutions of the present disclosure essentially or the part contributing to the prior art may be embodied in the form of a software product. The computer software product is stored in a storage medium (such as a ROM/RAM, a magnetic disk, or an optical disk), and includes several instructions for causing a terminal device (which may be a mobile phone, a computer, a server, or a network device) to execute the methods described in the embodiments of the present disclosure.

Further provided in this embodiment is a data sequence forming apparatus, which is configured to implement the described embodiments and preferred implementations, and what has been described will not be described herein again. The term "module", as used hereinafter, is a combination of software and/or hardware capable of realizing a predetermined function. Although the apparatus described in the following embodiment is preferably implemented by software, implementation by hardware or a combination of software and hardware is also possible and conceived.

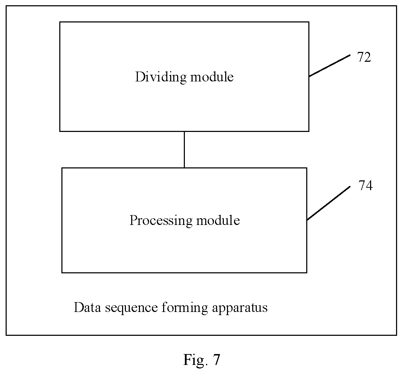

Fig. 7 is a structural block diagram of an optional data sequence forming apparatus according to an embodiment of the present disclosure. As shown in Fig. 7, the apparatus comprises:
a dividing module 72, configured to divide N frequency domain resource blocks used for transmitting data to be transmitted into two groups to obtain two groups of frequency domain resource blocks, wherein each group comprises L(m) frequency domain resource blocks, and the two groups of frequency domain resource blocks are distributed alternately in frequency domain, where n = 1, 2, ..., N, k(n) and L(m) are both positive integers, L(1) + L(2) = N, and m = 1 or 2.

It should be noted that each of the N frequency domain resource blocks comprises k(n) sub-carriers, where n = 1, 2, ..., N, k(n) and L(m) are both positive integers, L(1) + L(2) = N, and m = 1 or 2, wherein L(1) should refer to the number of frequency domain resource blocks comprised in the first group of frequency domain resource blocks, and L(2) should refer to the number of frequency domain resource blocks comprised in the second group of frequency domain resource blocks.

A processing module 74, configured to process data to be transmitted on the L(m) frequency domain resource blocks in each group respectively to form L(m) groups of data sequences.

By means of the described apparatus, N frequency domain resource blocks used for transmitting data to be transmitted are divided into two groups of frequency domain resource blocks, wherein each of the N frequency domain resource blocks comprises k(n) sub-carriers, each group comprises L(m) frequency domain resource blocks, and the two groups of frequency domain resource blocks are distributed alternately in frequency domain, where n = 1, 2, ..., N, k(n) and L(m) are both positive integers, L(1) + L(2) = N, and m = 1 or 2. Data to be transmitted on the L(m) frequency domain resource blocks in each group is processed respectively to form L(m) groups of data sequences. In the present solution, N frequency domain resource blocks are divided into two groups of frequency domain resource blocks, and the multiple groups can be distributed alternately. In this way, the bandwidth of the frequency domain resource blocks in different groups may be different, and windowing or filtering may be performed by using waveform functions with different parameters; the bandwidth of the frequency domain resource blocks in the same group is more likely to be equal, which facilitates performing unified windowing or filtering by using the same waveform function, and reduces the processing complexity. The alternate distribution method allows the interval between adjacent frequency domain resource blocks in the same group to be equal and greater than the bandwidth of the frequency domain resource blocks, and furthermore, allows the reciprocal of the time domain data interval of data to be transmitted on each resource block in the same group, after being subjected to an over-sampled inverse Fourier transform, to be equal to the interval between adjacent resource blocks in the group. In this way, interference between adjacent frequency domain resource blocks in the same group can be avoided, thereby solving the problem in the related art that interference easily occurs between sub-bands when data sequences are filtered.

Optionally, the processing module 74 is further configured to process the data to be transmitted on the L(m) frequency domain resource blocks to form L(m) groups of data sequences, wherein the processing comprises inverse Fourier transform. The inverse Flourier transform is an over-sampled inverse Fourier transform. The number of IFFT (or IDFT) points of the inverse Fourier transform is greater than or equal to k(n).

Further, the number of IFFT points is less than the sum of the number of the sub-carriers comprised in the N frequency domain resource blocks.

Further, inverse Fourier transform is performed on a certain frequency domain resource block, and a zero frequency position during the inverse Fourier transform operation falls within the range of this frequency domain resource block. Zero frequency positions of different frequency domain resource blocks during inverse Fourier transform operations are different.

Further, inverse Fourier transform is performed on a certain frequency domain resource block, and a zero frequency position (or a zero sub-carrier) during the inverse Fourier transform operation is located at one of k(n) sub-carriers of each resource block.

Further, the data to be transmitted is subjected to inverse Fourier transform to form a group of data sequences, and the data to be transmitted on the L(m) frequency domain resource blocks is subjected to inverse Fourier transform respectively to form L(m) groups of data sequences.

Further, before performing the inverse Fourier transform on the data to be transmitted, a Fourier transform operation FFT (or DFT) is also comprised.

Optionally, in an embodiment, the processing module 74 is further configured to process the L(m) groups of data sequences to form one group of data sequences, wherein the processing comprises inverse Fourier transform. The inverse Fourier transform is an over-sampled inverse Fourier transform. The number of IFFT points of the inverse Fourier transform is greater than L(m).

Further, the inverse Fourier transform comprises: performing inverse Fourier transform once on every L(m) pieces of data, wherein every L(m) piece of data are respectively from L(m) groups of data sequences. (For example, the L(m) groups of data sequences are arranged in L(m) rows respectively, L(m) pieces of data are then extracted according to columns, and inverse Fourier transform is performed once on every extracted L(m) pieces of data.)

Further, after a number of 0 are added to every L(m) pieces of data, the inverse Fourier transform is performed. (In other words, the processing of L(m) groups of data sequences further comprises adding multiple groups of zero data sequences, and then performing the inverse Fourier transform.)

Further, one group of data sequences refers to one group of time domain data sequences, and is formed by serially connecting multiple time domain data sequences generated by the inverse Fourier transform.

In an optional embodiment, the processing module 74 is further configured to process the L(m) groups of data sequences to form one group of data sequences, process two groups of data sequences corresponding to the two groups of frequency domain resource blocks to form a combined group of data sequences, and transmit the combined group of data sequences.

It should be noted that each group forms one group of data sequences.

It should be noted that two groups of frequency domain resource blocks are combined to form one group of data sequences.

In the operation "process two groups of data sequences corresponding to the two groups of frequency domain resource blocks to form a combined group of data sequences", the processing comprises: performing an addition operation on the two groups of data sequences to form one group of data sequences.

Further, the processing module 74 is further configured to perform a point multiplication operation on at least one group of data sequences before performing the addition operation on the two groups of data sequences to form one group of data sequences. In the point multiplication operation, the sequence to be multiplied by point multiplication is a sequence in which the modulus thereof is equal while the phase changes sequentially.

Further, the processing module 74 is further configured to perform a windowing operation or a filtering operation on each group of data sequences before performing the addition operation on the two groups of data sequences.

Further, the operation that the group of data sequences is transmitted further comprises filtering the group of data sequences.

Further, the operation that the group of data sequences is transmitted further comprises filtering each frequency domain resource block by using the same waveform function.

Further, the filtering is single-phase filtering or multi-phase filtering.

Further, the filtering functions used for multi-phase filtering comprise: a root raised cosine function, a raised cosine function, a rectangular function, an Isotropic Orthogonal Transform Algorithm (IOTA) function, or a 1+D function.

Further, the operation that the group of data sequences is transmitted further comprises performing a windowing operation on the group of data sequences.

Further, the operation that the group of data sequences is transmitted further comprises, by means of a windowing operation or a multi-phase filtering operation, filtering each frequency domain resource block by using the same waveform function.

Further, the data to be transmitted comprises constellation point modulated data and also reference signal data.

In an optional embodiment, the N frequency domain resource blocks are distributed continuously in the frequency domain.

In an optional embodiment, the L(m) frequency domain resource blocks in each group are discontinuous in the frequency domain, but the frequency spectrum interval between adjacent frequency domain resource blocks is equal.

In an optional embodiment, there is at least one group of frequency domain resource blocks, among the two groups of frequency domain resource blocks, in which the bandwidth of the frequency domain resource blocks is 1/w of the frequency spectrum interval between adjacent frequency domain resource blocks in the group, where w is a positive integer.

In an optional embodiment, in the process where data to be transmitted on the L(m) frequency domain resource blocks in each group is processed respectively to form L(m) groups of data sequences, the method further comprises: there is at least one group of frequency domain resource blocks, among the two groups of frequency domain resource blocks, on which the time domain interval between adjacent data of the data sequences is equal to the reciprocal of the frequency spectrum interval between adjacent resource blocks in the group.

In an optional embodiment, sub-carrier intervals of the N frequency domain resource blocks are all equal.

In an exemplary embodiment, among the L(m) frequency domain resource blocks in each group, the number of sub-carriers comprised in the frequency domain resource blocks is equal.

In an optional embodiment, among the two groups of frequency domain resource blocks, the bandwidth of the frequency domain resource blocks in each group is equal.

In an optional embodiment, among the two groups of frequency domain resource blocks, the bandwidth of the frequency domain resource blocks in different groups is not equal.

In an optional embodiment, among the two groups of frequency domain resource blocks, the bandwidth of the frequency domain resource blocks in different groups is equal.

In an optional embodiment, the bandwidth ratio of the frequency domain resource blocks in different groups is 1:U or U:1, where U = 2i - 1, and i is an integer greater than 0; when i = 0, it indicates that the bandwidth of the frequency domain resource blocks in different groups is equal.

In an optional embodiment, sub-carrier intervals of the N frequency domain resource blocks are all equal.

In an exemplary embodiment, among the L(m) frequency domain resource blocks in each group, the number of sub-carriers comprised in the frequency domain resource blocks is equal.

In an optional embodiment, among the two groups of frequency domain resource blocks, the bandwidth of the frequency domain resource blocks in each group is equal.

In an optional embodiment, among the two groups of frequency domain resource blocks, the bandwidth of the frequency domain resource blocks in different groups is not equal.

In an optional embodiment, among the two groups of frequency domain resource blocks, the bandwidth of the frequency domain resource blocks in different groups is equal.

In an optional embodiment, the bandwidth ratio of the frequency domain resource blocks in different groups is 1:U or U:1, where U = 2i - 1, and i is an integer greater than 0; when i = 0, it indicates that the bandwidth of the frequency domain resource blocks in different groups is equal.

It should be noted that the described various modules may be implemented by software or hardware. The latter may be implemented in the following manner, but is not limited thereto: all the modules are located in a same processor; alternatively, the described various modules are located in different processors in an arbitrary combination.

The embodiments of the present disclosure further provide a computer-readable storage medium, the computer-readable storage medium storing a computer program, wherein the computer program is configured to execute the steps in any one of the described method embodiments when running.

In an exemplary embodiment, the computer-readable storage medium may include, but is not limited to, any medium that can store a computer program, such as a USB flash disk, a Read-Only Memory (ROM), a Random Access Memory (RAM), a mobile hard disk, a magnetic disk, or an optical disk.

The embodiments of the present disclosure further provide an electronic device, comprising a memory and a processor, wherein the memory stores a computer program, and the processor is configured to run the computer program so as to execute the steps in any of the described method embodiments.

In an exemplary embodiment, the electronic device may further comprise a transmission device and an input/output device, wherein the transmission device is connected to the processor, and the input/output device is connected to the processor.

For specific examples in this embodiment, reference may be made to the examples described in the described embodiments and exemplary implementations, and details are not repeatedly described in this embodiment.

Obviously, those skilled in the art should understand that various modules or various steps in the embodiments of the present disclosure can be implemented by a universal computing apparatus, and the various modules or steps can be integrated on a single computing apparatus or distributed over a network formed by a plurality of computing apparatuses, and can be implemented by program codes executable by the computing apparatus, such that the modules or steps can be stored in a storage apparatus and executed by the computing apparatus, and the shown or described steps can be executed in sequences different from those described here in some cases, or the various modules or steps can be implemented by manufacturing the modules or steps into various integrated circuit modules respectively, or manufacturing multiple modules or steps among the various modules or steps into a single integrated circuit module. Thus, the present disclosure is not limited to any particular combination of hardware and software.

The foregoing descriptions are merely preferred embodiments of the present disclosure, and are not intended to limit the present disclosure. For those skilled in the art, the present disclosure may have various modifications and variations. Any modifications, equivalent replacements, improvements and the like made within the principle of the present disclosure shall belong to the scope of protection of the present disclosure.

## Claims

1. A method for forming data sequences, comprising:
dividing N frequency domain resource blocks used for transmitting data to be transmitted into two groups to obtain two groups of frequency domain resource blocks, wherein each of the two groups of frequency domain resource blocks comprises L(m) frequency domain resource blocks, and the two groups of frequency domain resource blocks are distributed alternately in frequency domain, where N and L(m) are both positive integers, and m = 1 or 2; and
processing data to be transmitted on the L(m) frequency domain resource blocks in each of the two groups of frequency domain resource blocks respectively to form L(m) groups of data sequences.

2. The method according to claim 1, wherein after processing data to be transmitted on the L(m) frequency domain resource blocks in each of the two groups of frequency domain resource blocks respectively to form L(m) groups of data sequences, the method further comprises:
processing the L(m) groups of data sequences to form one group of data sequences;
processing two groups of the one group of data sequences corresponding to the two groups of frequency domain resource blocks to form a combined group of data sequences; and
transmitting the combined group of data sequences.

3. The method according to claim 1, wherein the method further comprises:
the N frequency domain resource blocks are distributed continuously in the frequency domain.

4. The method according to claim 1, wherein the method further comprises:
the L(m) frequency domain resource blocks in each of the two groups of frequency domain resource blocks are discontinuous in the frequency domain, and frequency spectrum interval between adjacent frequency domain resource blocks is equal.

5. The method according to claim 1, wherein the method further comprises:
bandwidth of frequency domain resource blocks of at least one of the two groups of frequency domain resource blocks, is 1/w of frequency spectrum interval between adjacent frequency domain resource blocks in the group, where w is a positive integer.

6. The method according to claim 1, wherein the method further comprises:
time domain interval between adjacent data in data sequences of at least one of the two groups of frequency domain resource blocks, is equal to reciprocal of frequency spectrum interval between adjacent resource blocks in the group.

7. The method according to claim 1, wherein the method further comprises:
sub-carrier intervals of the N frequency domain resource blocks are all equal.

8. The method according to claim 1, wherein the method further comprises:
among the L(m) frequency domain resource blocks in each of the two groups of frequency domain resource blocks, number of sub-carriers comprised in each frequency domain resource block is equal.

9. The method according to claim 1, wherein the method further comprises:
among the two groups of frequency domain resource blocks, bandwidth of frequency domain resource blocks in each group is equal.

10. The method according to claim 1, wherein the method further comprises:
among the two groups of frequency domain resource blocks, bandwidth of frequency domain resource blocks in different groups is not equal.

11. The method according to claim 1, wherein the method further comprises:
among the two groups of frequency domain resource blocks, bandwidth of frequency domain resource blocks in different groups is equal.

12. The method according to claim 1, wherein the method further comprises:
bandwidth ratio of frequency domain resource blocks in different groups is 1:U or U:1, where U = 2i - 1, and i is an integer greater than 0; when i = 0, it indicates that bandwidth of frequency domain resource blocks in the different groups is equal.

13. A apparatus for forming data sequences, comprising:
a dividing module, configured to divide N frequency domain resource blocks used for transmitting data to be transmitted into two groups to obtain two groups of frequency domain resource blocks, wherein of the two groups of frequency domain resource blocks comprises L(m) frequency domain resource blocks, and the two groups of frequency domain resource blocks are distributed alternately in frequency domain, where N and L(m) are both positive integers, and m = 1 or 2; and
a processing module, configured to process data to be transmitted on the L(m) frequency domain resource blocks in each of the two groups of frequency domain resource blocks respectively to form L(m) groups of data sequences.

14. A storage medium, storing a computer program, wherein the computer program is configured to, when executed by a processor, implement the method according to any one of claims 1 to 12.

15. An electronic apparatus, comprising a memory and a processor, wherein the memory stores a computer program, and the processor is configured to execute the computer program to implement the method according to any one of claims 1 to 12.
